# EUROPEAN PATENT SPECIFICATION

(11) **EP 2 952 405 B1**
(45) Date of publication and mention of the grant of the patent: **06.10.2021**
(21) Application number: 14746838.3
(22) Date of filing: 22.01.2014
(51) Int. Cl.: B61H 13/20, B60T 13/66

(54) **RAILROAD VEHICLE BRAKE DEVICE, RAILROAD VEHICLE, AND RAILROAD VEHICLE FORMATION**
SCHIENENFAHRZEUGBREMSVORRICHTUNG, SCHIENENFAHRZEUG UND SCHIENENFAHRZEUGHERSTELLUNG
DISPOSITIF DE FREINAGE POUR VÉHICULE FERROVIAIRE, VÉHICULE FERROVIAIRE ET ENSEMBLE DE VÉHICULES FERROVIAIRES

(30) Priority: 30.01.2013 JP 2013016157
(43) Date of publication of application: 09.12.2015
(73) Proprietor: Nabtesco Corporation, Tokyo 102-0093 (JP)
(72) Inventor: KASAMATSU,Masaki, Kobe-shi Hyogo 651-2271 (JP); TEI,Koka, Kobe-shi Hyogo 651-2271 (JP); ASANO,Yoshio, Kobe-shi Hyogo 651-2271 (JP)
(74) Representative: Grünecker Patent- und Rechtsanwälte PartG mbB
(86) International application number: PCT/JP2014/051242
(87) International publication number: WO 2014/119447

(56) References cited:
- EP-A1- 2 388 172
- JP-A- H05 310 128
- JP-A- S61 253 255
- JP-A- 2006 088 964
- JP-A- 2012 245 949

## Description

### TECHNICAL FIELD

The present invention relates to a railroad vehicle brake device, a railroad vehicle, and a railroad vehicle formation.

### BACKGROUNDART

A known air brake device for railroad vehicles uses electric commands (for example, refer to patent document 1). An electric commanding air brake device is one example of such a railroad vehicle brake device.

Document EP 2 388 172 A1 discloses a method of towing away a broken train by a locomotive.

The electric commanding air brake device includes, for example, a brake control unit, a pressure control valve, an air tank, and a brake cylinder.

The brake control unit is operated by the driver of the railroad vehicle. The brake control unit generates an electric command when operated by the driver. The electric command is output to the pressure control valve. The pressure control valve sets the open amount (open degree) of the pressure control valve based on the electric command. The pressure control valve, which is connected to the air tank, supplies the brake cylinder with air, the amount of which corresponds to the open degree. The brake cylinder is operated by the supplied air. This applies braking force, which corresponds to a value set by the brake control unit, to the wheels of the railroad vehicle.

In addition to the electric commanding air brake device, an automatic air brake device is also known as a railroad vehicle brake device.

The automatic air brake device includes a brake pipe, a brake valve, a three-way valve, an auxiliary tank, and a brake cylinder.

When a braking operation is not being performed, the brake pipe supplies compressed air via the three-way valve to the auxiliary tank. To apply the brakes on the railroad vehicle, the driver of the railroad vehicle operates the brake valve. This reduces the pressure of the brake pipe and operates the three-way valve. As a result, the three-way valve supplies the brake cylinder with compressed air from the auxiliary tank. This applies braking force to the wheels of the railroad vehicle.

As described above, the electric commanding air brake device does not use a brake pipe, whereas the automatic air brake device uses a brake pipe.

### PRIOR ART DOCUMENT

### PATENT DOCUMENT

Patent Document 1: Japanese Laid-Open Patent Publication No. 5-310128

There is always a possibility of a failure occurring in a railroad vehicle during commercial operation. Thus, the railroad vehicle may be deadheaded from the location where the failure occurred to a maintenance depot by another railroad vehicle (hereafter referred to as the rescuing vehicle). The rescued railroad vehicle (hereafter referred to as the rescued vehicle) is coupled to the rescuing vehicle and transported to the maintenance depot.

For example, the brake device of the rescuing vehicle may be an electric commanding air brake device, and the brake device of the rescued vehicle may be an automatic air brake device. In such a case, the rescuing vehicle does not include a brake pipe. Thus, the rescuing vehicle cannot use the brake pipe of the rescued vehicle to apply the brakes on the rescued vehicle. In a vehicle formation formed by coupling a rescuing vehicle and a rescued vehicle, the brakes are needed to be applied on the rescuing vehicle and the rescued vehicle by only the brake device of the rescuing vehicle. In this vehicle formation, it is difficult to quickly stop the vehicles with the brakes. Thus, the rescuing vehicle and the rescued vehicle cannot travel at a high speed, and the deadheading of the rescued vehicle takes time.

The invention described in patent document 1, which is configured under the assumption that the rescuing vehicle and the rescued vehicle both include brake pipes, does not take into consideration connection to a railroad vehicle that does not include a brake pipe.

Accordingly, it is an object of the present invention to provide a railroad vehicle brake device that does not use a brake pipe to apply brakes on a railroad vehicle including the railroad vehicle brake device but nevertheless is able to use another railroad vehicle brake device that includes a brake pipe.

**According to the present invention said object is solved by a railroad vehicle brake device arranged in a railroad vehicle having the features of independent claim 1. Preferred embodiments are laid down in the dependent claims.**
(1) To achieve the above object, a railroad vehicle brake device according to one aspect of the present invention is a railroad vehicle brake device arranged in a railroad vehicle and includes a first brake controller and a second brake controller. The first brake controller includes a first valve device connected to a main reservoir pipe. The first valve device includes a first gate of which open amount corresponds to a first electric command serving as a predetermined electric signal, and the first valve device outputs fluid pressure, which serves as drive pressure from the main reservoir pipe, from the first gate to a brake actuator. The second brake controller sets a brake pipe pressure of an automatic air brake device included in a counterpart railroad vehicle serving as a railroad vehicle that is separate from the railroad vehicle. The second brake controller includes a second valve device. The second valve device is configured to be capable of setting the brake pipe pressure by supplying air to or exhausting air from the fluid pressure from the main reservoir pipe when operated based on a second electric command serving as predetermined electric signal.
   With this configuration, in a railroad vehicle including the railroad vehicle brake device (hereafter, referred to also as the primary vehicle), the railroad vehicle brake device is able to realize an electric commanding brake. Further, the railroad vehicle brake device is able to use an automatic air brake device including a brake pipe and installed in a counterpart railroad vehicle. More specifically, the railroad vehicle brake device can drive the brake actuator of the primary vehicle to generate braking force corresponding to the command value of the first electric command. Further, the railroad vehicle brake device can set the brake pipe of the counterpart railroad vehicle to a brake pipe pressure based on the second electric command. In this manner, the present invention allows for the use of the brake device of the counterpart railroad vehicle that includes the brake pipe even with a structure that does not use a brake pipe to apply brakes to the railroad vehicle provided with the railroad vehicle brake device. This allows the primary vehicle and the counterpart railroad vehicle to be further promptly slowed down.
(2) Preferably, the first valve device includes a first electro-pneumatic conversion valve and a first relay valve. The first electro-pneumatic conversion valve is connected to the main reservoir pipe. The first electro-pneumatic conversion valve converts the fluid pressure to a first control pressure and outputs the first control pressure when operated based on the first electric command. The first relay valve includes the first gate and sets the open amount of the first gate in correspondence with the first control pressure.
   With this configuration, in correspondence with the first control pressure, which is a pilot pressure, the first relay valve is able to output fluid having the necessary volume to the brake actuator as drive force corresponding to the first electric command. Thus, the structure of the first electro-pneumatic conversion valve formed by an electromagnetic valve or the like is compact.
(3) Preferably, the second valve device is configured to be capable of setting the brake pipe pressure having a value associated with a value of the drive pressure.
   With this configuration, the drive pressure that supplies the fluid of the brake pipe to the brake actuator of the primary vehicle is associated with the brake pipe pressure. As a result, the railroad vehicle brake device ensures further conformance of the braking state of the primary vehicle and the braking state of the counterpart railroad vehicle. Consequently, the railroad vehicle brake device of the primary vehicle cooperates with the automatic air brake device of the counterpart railroad vehicle to further promptly slow down the primary vehicle and the counterpart railroad vehicle.
(4) Preferably, the first valve device is configured to supply the drive pressure to the brake actuator after a predetermined time elapses from when the brake pipe pressure from the second brake controller is reduced.
   With this configuration, the first valve device outputs the drive pressure when receiving the first electric command, which is an electric signal, and operates the brake actuator. Thus, the first valve device outputs the drive pressure within a short time from when receiving the first electric command and has high responsiveness. In the counterpart railroad vehicle, the brake actuator of the counterpart railroad vehicle is operated when the pressure of the brake pipe changes. Thus, in the brake device of the counterpart railroad vehicle, the speed at which a pressure change propagates in the brake pipe is lower than the propagation speed of an electric signal, and the responsiveness is relatively low. Taking these characteristics into consideration, the point of time for starting the supply of drive pressure from the first valve device is delayed from the point of time for reducing the pressure of the brake pipe pressure from the second valve device. This further increases the conformance of the operation timing of the brake actuator of the primary vehicle and the operation timing of the brake actuator of the counterpart railroad vehicle. As a result, the counterpart railroad vehicle does not excessively push the primary vehicle when applying the brakes. Thus, the coupler is not adversely affected.
(5) Preferably, the second brake controller includes a main brake pipe connected to the main reservoir pipe and to the brake pipe of the counterpart railroad vehicle, and the second valve device includes a second electro-pneumatic conversion valve and a second relay valve. The second electro-pneumatic conversion valve is connected to the main brake pipe. The second electro-pneumatic conversion valve converts the fluid pressure to a second control pressure and outputs the second control pressure when operated based on the second electric command. The second relay valve includes a second gate that adjusts the fluid pressure to the brake pipe pressure and outputs the fluid pressure. The second relay valve sets an open amount of the second gate in correspondence with the second control pressure.
   With this configuration, the brake pipe pressure and the necessary air amount can be generated in correspondence with the second electric command serving as an electric signal. This allows for the braking amount of the counterpart railroad vehicle to be set with further accuracy.
(6) More preferably, the second brake controller includes a release valve device configured to transmit the brake pipe pressure from the second relay valve, and the release valve device is configured to be capable of readily releasing fluid from the main brake pipe.
   With this configuration, when driving the brake actuator of the counterpart railroad vehicle, the brake pipe pressure may be promptly reduced from the railroad vehicle brake device.
(7) More preferably, the release valve device includes a main release valve, and the main release valve is configured to be capable of readily releasing fluid from the main brake pipe when operating an emergency brake.
   With this configuration, when activating the emergency brake that generates the strongest braking force, the pressure of the brake pipe in the counterpart railroad vehicle can be promptly reduced. Thus, the braking force can be promptly applied.
(8) Preferably, the release valve device includes an electromagnetic valve, and the electromagnetic valve is configured to be capable of readily releasing fluid from the main brake pipe based on an emergency brake operation command of the railroad vehicle.
   With this configuration, the electromagnetic valve opens based on an emergency brake command of the primary vehicle. Thus, the pressure of the main brake pipe, that is, the pressure of the brake pipe in the counterpart railroad vehicle, can be forcibly exhausted. This allows for the brakes to be promptly applied on the counterpart railroad vehicle.
(9) Preferably, the second brake controller includes a bypass pipe and a one-way valve. The bypass pipe is connected to the main brake pipe. The bypass pipe bypasses the release valve device. The one-way valve is arranged in the bypass pipe. The one-way valve restricts pressure transmission toward the second valve device in the bypass pipe.
   With this configuration, when the brake pressure from the brake pipe of the counterpart railroad vehicle acts on the main brake pipe, the fluid of the main brake pipe can be circulated to the release valve device. This maintains the release valve device in the same state.
(10) Preferably, the second brake controller includes a constriction that partially decreases an inner diameter of the main brake pipe, and the second brake controller is configured so that fluid that has passed through the constriction in the main brake pipe is supplied via the second relay valve to the brake pipe of the counterpart railroad vehicle.
   With this configuration, the amount of fluid per unit time supplied from the main brake pipe to the brake pipe of the counterpart railroad vehicle is restricted so as not to become greater than or equal to a predetermined amount. As a result, for example, when an automatic brake valve or a conductor valve (not shown) is operated in the counterpart railroad vehicle, as long as the supplied amount of fluid is greater than the released amount, reduction in the pressure of the brake pipe is further ensured. As a result, the application of brakes to the counterpart railroad vehicle by the operation of the automatic brake valve or the like is further ensured. Further, the restriction is arranged so that the operation of the second relay valve does not affect the responsiveness of changes in the brake pipe pressure. This allows the brake pipe pressure to be promptly changed.
(11) Preferably, the railroad vehicle brake device includes a pressure detector that detects the brake pipe pressure of the counterpart railroad vehicle, and the first valve device is capable of outputting the drive pressure, which is set based on the brake pipe pressure, from the first gate to the brake actuator.
   With this configuration, for example, when the counterpart railroad vehicle tows the primary vehicle, the brake pipe pressure of the counterpart railroad vehicle, that is, the drive force corresponding to the braking amount of the counterpart railroad vehicle can be generated at the first valve device. Thus, when the counterpart railroad vehicle tows the primary vehicle, the brake device of the counterpart railroad vehicle and the brake device of the primary vehicle cooperate to further promptly apply brakes to the counterpart railroad vehicle and the primary vehicle.
(12) To achieve the above object, a railroad vehicle according to one aspect of the present invention includes the railroad vehicle brake device described above.
   With this configuration, even in a configuration that does not use a brake pipe to apply brakes to the railroad vehicle, the brake device for a counterpart railroad vehicle that includes a brake pipe can be used.
(13) To achieve the above object, a railroad vehicle formation according to one aspect of the present invention includes a plurality of railroad vehicles coupled one after another and the railroad vehicle brake device described above. The railroad vehicle brake device is arranged in one or both of a head vehicle and a trailing vehicle among the rail road vehicles.
   With this configuration, even in a configuration that does not use a brake pipe to apply brakes to the railroad vehicle, the brake device for a counterpart railroad vehicle that includes a brake pipe can be used. Further, among the railroad vehicles, the brake pipe for using the brake device of the counterpart railroad vehicle is arranged in only the vehicle that can be coupled to the counterpart railroad vehicle. This simplifies the structure of the railroad vehicle formation.

### EFFECT OF THE INVENTION

Even when a railroad vehicle does not use a brake pipe to apply the brakes, the present invention allows for the use of a brake device of a counterpart railroad vehicle that includes a brake pipe.

### BRIEF DESCRIPTION OF THE DRAWINGS

Fig. 1 is a conceptual diagram of a railroad vehicle formation including a railroad vehicle brake device according to one embodiment of the present invention.
Fig. 2 is a conceptual diagram of a counterpart railroad vehicle formation that is another railroad vehicle formation.
Fig. 3 is an enlarged view of a main release valve.
Fig. 4 is a diagram illustrating one example of the operation of the railroad vehicle formation.
Fig. 5 is a diagram illustrating one example of the operation of the counterpart railroad vehicle formation.
Fig. 6 is a diagram illustrating one example of the operation of the railroad vehicle formation.
Fig. 7 is a diagram illustrating one example of the operation of the counterpart railroad vehicle formation.
Fig. 8 is a diagram illustrating one example of the operation of the railroad vehicle formation.
Fig. 9 is a diagram illustrating one example of the operation of the railroad vehicle formation.

### MODES FOR CARRYING OUT THE INVENTION

One embodiment of the present invention will now be described with reference to the drawings. The present invention is not limited to the form exemplified in the following embodiment and may be widely applied as a railroad vehicle brake device.

### [Schematic structure of railroad vehicle formation]

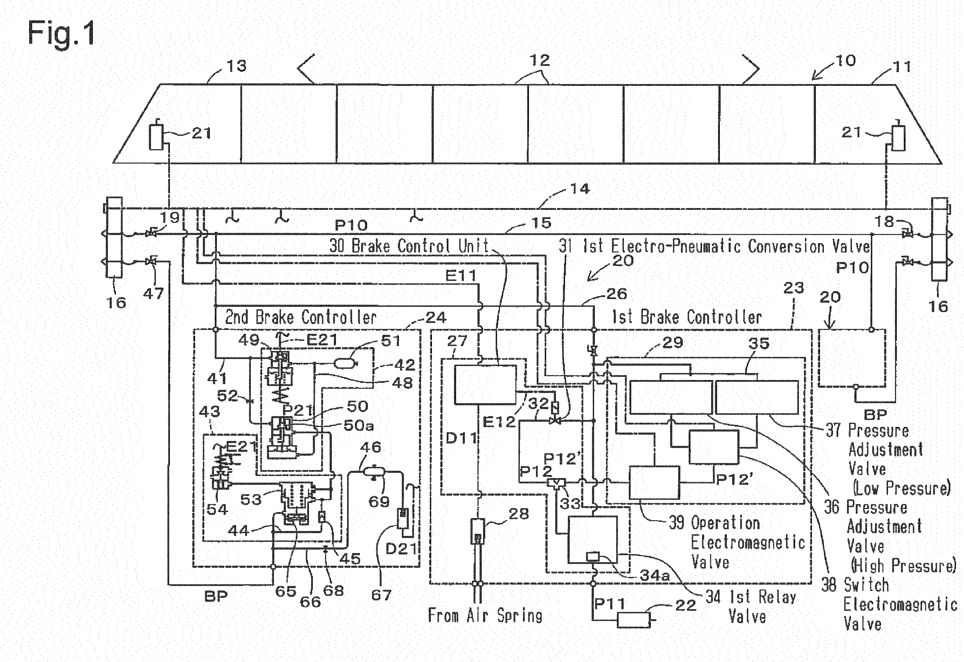

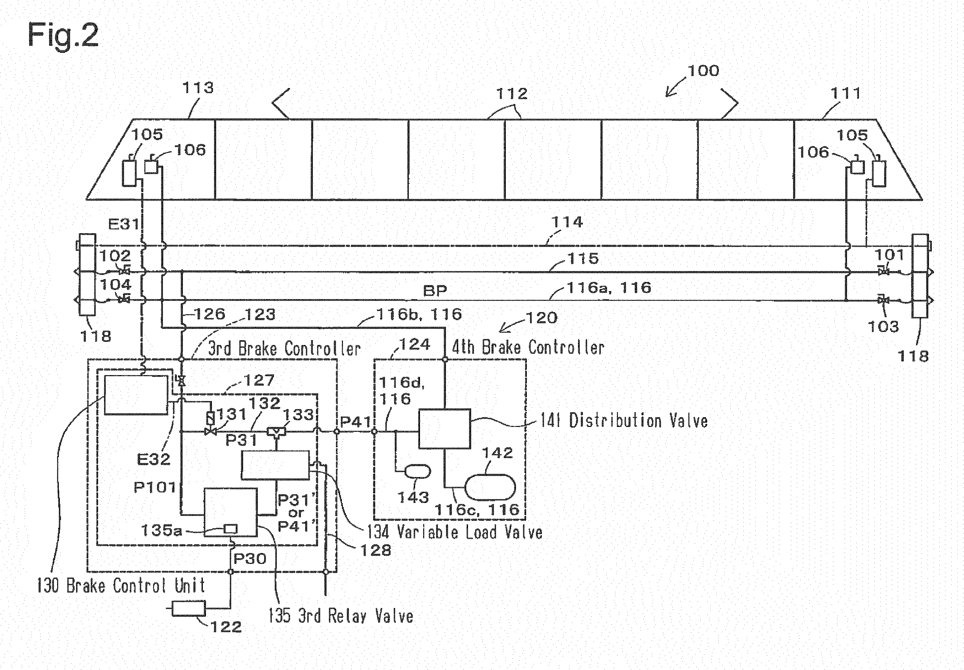

Fig. 1 is a conceptual diagram of a railroad vehicle formation 10 including a railroad vehicle brake device according to one embodiment of the present invention. Fig. 2 is a conceptual diagram of a counterpart railroad vehicle formation 100 that is a railroad vehicle formation separate from the railroad vehicle formation 10. Referring to Figs. 1 and 2, the railroad vehicle formation 10 is formed by, for example, passenger vehicles or the like. The railroad vehicle formation 10 includes a head vehicle 11, intermediate vehicles 12, and a trailing vehicle 13, which are vehicles coupled one after another. There is one intermediate vehicle 12 or multiple intermediate vehicles 12 (in the present embodiment, multiple).

The vehicles 11, 12, and 13 each include an electric command cable 14. Further, the vehicles 11, 12, and 13 each include a main reservoir pipe (MRP) 15. The main reservoir pipes 15 run throughout each of the vehicles 11, 12, and 13. The main reservoir pipes 15 are filled with compressed air, which is compressed by an air compressor (not shown). The main reservoir pipes 15 of the head vehicle 11 and the trailing vehicle 13 respectively include sluice valves 18 and 19. The sluice valves 18 and 19 are closed when the railroad vehicle formation 10 travels solely. When the railroad vehicle formation 10 is connected to the counterpart railroad vehicle formation 100, the corresponding sluice valves 18 and 19 are open.

The head vehicle 11 includes a railroad vehicle brake device 20. The trailing vehicle 13 also includes a railroad vehicle brake device 20 (hereafter, simply referred to as the brake device 20). The brake device 20 of the head vehicle 11 and the brake device 20 of the trailing vehicle 13 have identical configurations. Thus, the description will focus on the brake device 20 of the trailing vehicle 13, and the brake device 20 of the head vehicle 11 will not be described in detail.

In the present embodiment, the railroad vehicle brake device 20 uses the configuration of an electric commanding air brake device to apply the brakes on the railroad vehicle formation 10. Further, the railroad vehicle brake device 20 uses the configuration of an automatic air brake device to apply the brakes on the counterpart railroad vehicle formation 100.

The brake device 20 includes a brake setting unit 21, a brake actuator 22, a first brake controller 23, and a second brake controller 24.

The brake setting unit 21 is used to set the braking force for each of the vehicles 11, 12, and 13. The brake setting unit 21 is configured to be operated by a driver or the like of the railroad vehicle formation 10. When operated by the driver, the brake setting unit 21 outputs a first electric command E11 and a second electric command E21, which serve as electric signals. The brake setting unit 21, for example, synchronously outputs the first electric command E11 and the second electric command E21. However, the first electric command E11 and the second electric command E21 may be independently output. The command contents of the first electric command E11 and the second electric command E21 are, for example, a brake release command, a normal braking command, or an emergency braking command.

The brake release command refers to a command that releases the applied brakes. The normal braking command refers to a command that applies the brakes with a braking force designated by the driver. The emergency braking command refers to a command that applies the brakes with the maximum set braking force.

The brake setting unit 21 outputs the first electric command E11 to the first brake controller 23 through the electric command cable 14 and outputs the second electric command E21 to the second brake controller 24 through the electric command cable 14. When receiving the first electric command E11, the first brake controller 23 operates the brake actuator 22.

The brake actuator 22 is configured to be operated by pneumatic pressure and is a pneumatic pressure cylinder in the present embodiment. Further, in the present embodiment, the brake actuator 22 includes a piston (not shown). The piston is moved by an output corresponding to the drive pressure P11 from the first brake controller 23. The movement of the piston moves brake pads (not shown), and the brake pad applies frictional resistance to the wheels (not shown). This applies the brakes to the railroad vehicle formation 10. In this manner, the first brake controller 23 controls the operation of the brake actuator 22, which applies the brakes on the railroad vehicle formation 10. The second brake controller 24 is not configured to supply the brake actuator 22 with the drive pressure P11.

### [Schematic structure of first brake controller]

The first brake controller 23 includes a drive pressure pipe 26, a first valve device 27, a pressure sensor 28, and an emergency brake device 29.

The drive pressure pipe 26 is used to transmit the drive force P11, which drives the brake actuator 22, to the brake actuator 22. The drive pressure pipe 26 is connected to the main reservoir pipe 15 and a cylinder chamber (not shown) of the brake actuator 22. An intermediate portion of the drive pressure pipe 26 is connected to the first valve device 27.

The first valve device 27 is configured to generate, when receiving a normal braking command as the first electric command E11, the drive pressure P11 in accordance with the command value of the normal brake command. The valve device 27 is connected to the main reservoir pipe 15 via the drive pressure pipe 26.

The first valve device 27 includes a brake control unit 30, a first electro-pneumatic conversion valve 31, a first control pipe 32, a dual check valve 33, and a first relay valve 34.

The brake control unit 30 is, for example, a controller including a central processing unit (CPU), a read only memory (ROM), and a random access memory (RAM). When receiving a normal brake command as the first electric command E11, the brake control unit 30 outputs a first electro-pneumatic conversion command E12. More specifically, to set the first electro-pneumatic conversion command E12, the brake control unit 30 refers to the first electric command E11 and a pressure detection vale D11, which is received from the pressure sensor 28.

The pressure sensor 28 is connected to an air spring (not shown), which serves as a suspension device of the trailing vehicle 13, and detects the pressure of an air chamber in the air spring. The pressure detection value D11, which is detected by the pressure sensor 28, is varied by the total weight of the trailing vehicle 13 including the passengers and the like.

The brake control unit 30 calculates the first electro-pneumatic conversion command E12 from the pressure detection value D11 and a control command value, which is indicated by the first electric command E11, and outputs the first electro-pneumatic conversion command E12. The first electro-pneumatic conversion command E12 is provided to the first electro-pneumatic conversion valve 31.

The first electro-pneumatic conversion valve 31 serves as a valve that converts an electric signal to a pneumatic pressure signal. The first electro-pneumatic conversion valve 31 is, for example, a motor-operated valve and allows the open amount of the valve 31 to be set in multiple steps. The first electro-pneumatic conversion valve 31 sets the open amount of the valve 31 to a value corresponding to the first electro-pneumatic conversion command E12. The first electro-pneumatic conversion valve 31 is located in an intermediate portion of the first control pipe 32.

The first control pipe 32 is branched from the drive pressure pipe 26. The first electro-pneumatic conversion valve 31 is connected to the main reservoir pipe 15 via the first control pipe 32. The fluid pressure P10 of the main reservoir pipe 15 is converted to the first control pressure P12 in the first electro-pneumatic conversion valve 31. In the above configuration, the first electro-pneumatic conversion valve 31 converts the fluid pressure P10 from the main reservoir pipe P10 to the first control pressure P12 and output the first control pressure P12 when operated based on the first electric command E11. An intermediate portion of the first control pipe 32 is connected to the dual check valve 33, which is supplied with the first control pressure P12.The dual check valve 33 is a valve including two input ports and one output port. When fluids having different pressures are respectively supplied to the two input ports, the dual check valve 33 is configured to supply the output port with the fluid having the larger pressure. One of the input ports of the dual check valve 33, which is connected to the first electro-pneumatic conversion valve 31 by the first control pipe 32, receives the first control pressure P12. The output port of the dual check valve 33 is connected to the first relay valve 31.

The first relay valve 34 is a valve operated by the first control pressure P12 from the first electro-pneumatic conversion valve 31 or a first control pressure P12', which will be described later, from the emergency brake device 29. The first relay valve 34 is connected to an intermediate portion of the drive pressure pipe 26. The first relay valve 34 includes a first gate 34a. The first gate 34a is continuously connected to the interior of the drive pressure pipe 26. The condition of the fluid passing through the drive pressure pipe 26 changes in accordance with the open amount of the first gate 34a. In the present embodiment, the first relay valve 34 sets the open amount of the first gate 34a in accordance with the first control pressure P12 or the first control pressure P12', which are applied to the first relay valve 34.

In the structure described above, the first valve device 27 converts the fluid pressure P10 from the main reservoir pipe 15 to the drive pressure P11. Then, the first valve device 27 outputs the drive pressure P11 from the first gate 34a to the brake actuator 22.

As described above, the first control pressure P12' is output from the emergency brake device 29. When an emergency braking command is output as the first electric command E11, the emergency brake device 29 performs an emergency brake operation.

The emergency brake device 29 includes an emergency brake pipe 35, pressure adjustment valves 36 and 37, a switch electromagnetic valve 38, and an operation electromagnetic valve 39.

The emergency brake pipe 35 is connected to the main reservoir pipe 15 by the drive pressure pipe 26. The pressure adjustment valves 36 and 37 are arranged in an intermediate portion of the emergency brake pipe 35. The pressure adjustment valves 36 and 37 are used to set the value of the first control pressure P12'. The present embodiment includes a high-pressure adjustment valve 36 and a low-pressure adjustment valve 37. The pressure adjustment valves 36 and 37 are both used to convert the fluid pressure P10 to the first control pressure P12'. The pressure adjustment valves 36 and 37 are configured so that only one of the valves outputs the first control pressure P12'. The first control pressure P12' that is output from the high-pressure adjustment valve 36 is greater than the first control pressure P12' that is output from the low-pressure adjustment valve 37. The pressure adjustment valves 36 and 37 are connected to the switch electromagnetic valve 38.

The switch electromagnetic valve 38 is configured to selectively output the first control pressure P12' from the high-pressure adjustment valve 36 and the first control pressure P12' from the low-pressure adjustment valve 37. The switch electromagnetic valve 38 is electrically connected to the brake setting unit 21 and the like by the electric command cable 14. Thus, the switch electromagnetic valve 38 is used to set which one of the first control pressures P12' is output in accordance with a command or the like from the brake setting unit 21. The first control pressure P12' is greater than the first control pressure P12 from the first electro-pneumatic conversion valve 31.

The switch electromagnetic valve 38 is electrically connected to the brake control unit 30. This allows the switch electromagnetic valve 38 to output the first control pressure P12' in accordance with the pressure detection value D11 of the pressure sensor 28. The first control pressure P12' is output to the dual check valve 33 via the operation electromagnetic valve 39.

The operation electromagnetic valve 39 is used to start an emergency braking operation. The operation electromagnetic valve 39 is electrically connected to the brake setting unit 21 by the electric command cable 14. When provided with an emergency braking command as the first electric command E11, the valve member of the operation electromagnetic valve 39 opens. This applies the first control pressure P12' to the first relay valve 34 via the dual check valve 33. As a result, in the first relay valve 34, the open degree (open amount) of the first gate 34a becomes greater than the open degree of the first gate 34a that is based on the first control pressure P12. Thus, the drive pressure P11 becomes greater than when the normal brake command is issued. As a result, the operation amount of the brake actuator 22 is further increased. Consequently, the braking force of the railroad vehicle formation 10 is further increased.

The schematic structure of the first brake controller 23 has been described above. The schematic structure of the second brake controller 24 will now be described.

### [Schematic structure of second brake controller]

The second brake controller 24 is used to set the brake pipe pressure BP in a brake pipe 116 of a fourth brake controller 124, which serves as an automatic air brake device, which will be described later, of the counterpart railroad vehicle formation 100. As described above, the brake controller 24 does not generate the drive pressure P11, which operates the brake actuator 22 of the railroad vehicle formation 10 in which the second brake controller 24 is installed.

The second brake controller 24 includes a main brake pipe 41, a second valve device 42, a release valve device 43, a bypass pipe 44, a one-way valve 45, and a brake pipe pressure detector 46.

The main brake pipe 41 is used to transmit the brake pipe pressure BP to the brake pipe 116 of the counterpart railroad vehicle formation 100. The main brake pipe 41 is connected to the main reservoir pipe 15 and to a coupler 16 of the trailing vehicle 13. The main brake pipe 41 is connected to a sluice valve 47 in the coupler 16. The sluice valve 47 is closed when the railroad vehicle formation 10 travels solely. The sluice valve 47 opens when the railroad vehicle formation 10 is coupled to the counterpart railroad vehicle formation 100. When the sluice valve 47 is open, the open area in the main brake pipe 41 is open to the open area in the brake pipe 116 of the counterpart railroad vehicle formation 100. The intermediate portion of the main brake pipe 41 is connected to the second valve device 42.

The second valve device 42 is connected to the main reservoir pipe 15 via the main brake pipe 41. The second valve device 42 is operated based on, for example, the second electric command E21, which is output synchronously with the first electric command E11. As a result, the second valve device 42 supplies air to or exhausts air from the fluid pressure P10 from the main reservoir pipe 15 to convert the fluid pressure P10 to the brake pipe pressure BP. In the present embodiment, the second valve device 42 is capable of setting the brake pipe pressure BP with a pressure value associated with the pressure value of the drive pressure P11 of the first brake controller 23.

The second valve device 42 includes a second control pipe 48, a second electro-pneumatic conversion valve 49, and a second relay valve 50.

The second control pipe 48 is branched from the main brake pipe 41. An intermediate portion of the second control pipe 48 is connected to the second electro-pneumatic conversion valve 49.

The second electro-pneumatic conversion valve 49 is used as a valve that converts an electric signal to a pneumatic pressure signal. When the second electro-pneumatic conversion valve 49 releases the applied brakes, the second electro-pneumatic conversion valve 49 fully opens. The second electro-pneumatic conversion valve 49 is configured to operate when receiving a normal brake command. The second electro-pneumatic conversion valve 49 is, for example, a motor-operated valve and allows the open amount of the valve 49 to be set in multiple steps. The second electro-pneumatic conversion valve 49 sets the open amount of the valve 49 to a value corresponding to the braking command value of the second electro-pneumatic conversion command E21.

The second electro-pneumatic conversion valve 49 is connected to the main reservoir pipe 15 via the second control pipe 48 and the main brake pipe 41. The fluid pressure P10 of the main reservoir pipe 15 is converted to a second control pressure P21 in the second electro-pneumatic conversion valve 49. In the above structure, the second electro-pneumatic conversion valve 49 is operated based on the second electric command E21. This converts the fluid pressure P10 from the main reservoir pipe 15 to the second control pressure P21 and outputs the second control pressure P21. An intermediate portion of the second control pipe 48 is connected to an air tank 51. The air tank 51 is used as an accumulator and reduces pressure pulsation in the second control pipe 48. The second control pipe 48 is connected to the second relay valve 50.

The second relay valve 50 is a valve operated when receiving the second control pressure P21 from the second electro-pneumatic conversion valve 49. The second relay valve 50 is connected to an intermediate portion of the main brake pipe 41. The second relay valve 50 includes a second gate 50a. The second gate 50a is continuously connected to the interior of the main brake pipe 41. The condition of the fluid passing through the main brake pipe 41 changes in accordance with the open amount of the second gate 50a. In the present embodiment, the second relay valve 50 sets the open amount of the second gate 50a in correspondence with the second control pressure P21, which is applied to the second relay valve 50.

In the above structure, the second valve device 42 adjusts the fluid pressure P10 from the main reservoir pipe 15 to the brake pipe pressure BP and outputs the fluid pressure P10 from the second gate 50a.

The main brake pipe 41 includes a first constriction 52 between the second relay valve 50 and the main reservoir pipe 15. The first constriction 52 partially decreases the inner diameter of the main brake pipe 41. The air in the main brake pipe 41 that passes through the first constriction 52 is supplied to the brake pipe 116 of the counterpart railroad vehicle formation 100 via the second relay valve 50 and the release valve device 43.

The release valve device 43 is connected to an intermediate portion of the main brake pipe 41 and receives the brake pipe pressure BP from the second relay valve 50. The release valve device 43 is configured to be capable of readily releasing the brake pipe pressure BP out of the brake pipe 116 of the counterpart railroad vehicle formation 100.

More specifically, the release valve device 43 includes a main release valve 53 and an electromagnetic release valve 54.

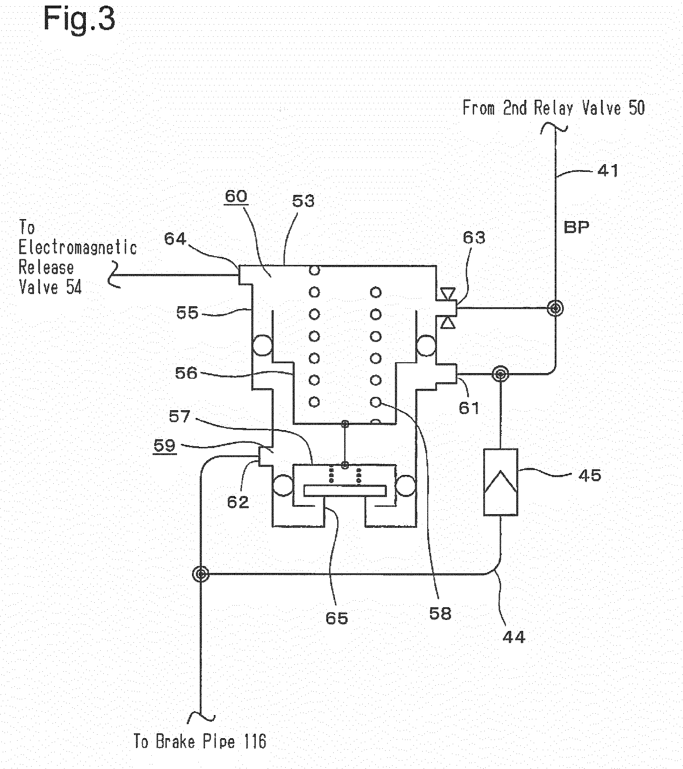

Fig. 3 is an enlarged view of the main release valve 53. Referring to Figs. 1 and 3, the main release valve 53 is configured to be capable of releasing air from the brake pipe 116 when pressure is released from a second chamber 60 of the electromagnetic release valve 54.

The main release valve 53 includes a valve casing 55, a piston 56, a valve member 57, and a spring 58.

The valve casing 55 is a hollow casing. The piston 56 divides the interior of the valve casing 55 into a first chamber 59 and a second chamber 60. An O-ring extending around the peripheral portion of the piston 56 hermetically seals the gap between the valve casing 55 and the piston 56. Movement of the piston 56 changes the volume of the first chamber 59 and the volume of the second chamber 60.

The first chamber 59 serves as a portion that transmits the brake pipe pressure BP from the second relay valve 50 to the brake pipe 116 of the counterpart railroad vehicle formation 100. Further, the brake pipe pressure BP from the second relay valve 50 is also applied to the second chamber 60.

The valve casing 55 includes first to fourth ports 61 to 64 and a release opening 65. The first port 61 and the second port 62 are open to the first chamber 59 and connected to the main brake pipe 41. This structure transmits the brake pressure pipe BP through the first port 61, the first chamber 59, and the second port 62 to the brake pipe 116 of the counterpart railroad vehicle formation 100.

The third port 63 and the fourth port 64 are open to the second chamber 60. The third port 63 is connected in parallel to the first port 61 and configured to receive the brake pipe pressure BP from the second relay valve 50. The fourth port 64 is connected to the electromagnetic release valve 54.

The release opening 65 is continuously connected to the first chamber 59 and continuously connected to the outside of the first chamber 59 and the valve casing 55. The valve member 57 closes the release opening 65. The valve member 57, which is fixed to the piston 56, is moved synchronously with the piston 56. This opens the release opening 65. When the release opening 65 is open, fluid is released from the first chamber 59. That is, the brake pipe pressure BP of the brake pipe 116 is reduced.

The spring 58 is attached to the piston 56. The spring 58 urges (presses) the piston 56 and applies force for closing the release opening 65 to the piston 56 and the valve member 57.

The main release valve 53 having the above structure is connected to the electromagnetic release valve 54. The electromagnetic release valve 54 is an electromagnetic valve and connected via the fourth port 64 to the second chamber 60 of the main release valve 53. The electromagnetic release valve 54 is electrically connected to the brake setting unit 21 by the electric command cable 14. The electromagnetic release valve 54 is configured to open when receiving an emergency braking command as the second electric command E21. This exhausts air from the second chamber 60, and the pressure of the first chamber 59 raises the piston 56 and the valve member 57. This discharges the brake pipe pressure BP out of the brake pipe 116 of the counterpart railroad vehicle formation 100.

The bypass pipe 44 is arranged in the vicinity of the main release valve 53. The bypass pipe 44 is connected to the main brake pipe 41 and configured to bypass the main release valve 53. One end of the bypass pipe 44 is connected between a branching portion of the first port 61 and the third port 63 in the main brake pipe 41 and the first port 61 of the main release valve 53. The other end of the bypass pipe 44 is connected to a portion in the main brake pipe 41 connected to the second port 62 of the main release valve 53. An intermediate portion of the bypass pipe 44 is connected to the one-way valve 45.

The one-way valve 45 is arranged in the bypass pipe 44 to restrict pressure transmission toward the second valve device 42. In the present embodiment, the one-way valve 45 restricts pressure transmission from one end to the other end of the bypass pipe 44. In the main brake pipe 41, the brake pipe pressure detector 46 is arranged in the vicinity of the portion where the bypass pipe 44 is connected.

The brake pipe pressure detector 46 is arranged to detect the pressure value of the brake pipe pressure BP in the brake pipe 116. The brake pipe pressure detector 46 includes a brake pressure intake pipe 66 (hereafter, referred to as the pressure intake pipe 66). One end of the pressure intake pipe 66 is connected to the brake pipe 116 of the counterpart railroad vehicle formation 100. The other end of the pressure intake pipe 66 is connected to a pressure sensor 67. The pressure sensor 67 detects the pressure BP in the brake pipe 116 and outputs the detected pressure detection value D21 through the electric command cable 14 as an electric signal to the brake control unit 30. The brake control unit 30 is capable of generating the first electric command E11 based on the pressure in the brake pipe 116. This allows the first electric command E11 to be generated so that the brake actuator 22 generates the braking force corresponding to the pressure BP in the brake pipe 116 when the railroad vehicle formation 10 tows the counterpart railroad vehicle formation 100. That is, the first valve device 27 is capable of outputting the drive pressure P11, which is set based on the brake pipe pressure BP, from the first gate 34a to the brake actuator 22.

An intermediate portion of the pressure intake pipe 66 includes a second constriction 68. The second constriction 68 partially decreases the inner diameter of the pressure intake pipe 66. The intermediate portion of the pressure intake pipe 66 also includes an air tank 69, which serves as an accumulator. This reduces pressure pulsation in the pressure intake pipe 66.

The schematic structure of the brake device 20 has been described above.

### [Railroad vehicle brake device for intermediate vehicles]

Each intermediate vehicle 12 includes a brake device (not shown). The brake device includes a brake controller that is similar to the first brake controller 23, and a brake actuator that is similar to the brake actuator 22. The brake device is operated based on electric commands of the brake setting unit 21. More specifically, in the railroad vehicle formation 10, only the head vehicle 11 and the trailing vehicle 13 are provided with the brake device 20. However, only one of the head vehicle 11 and the trailing vehicle 13 may be provided with the brake device 20.

### [Schematic structure of counterpart railroad vehicle formation]

The structure of the counterpart railroad vehicle formation 100 will now be described. With reference to Fig. 2, the counterpart railroad vehicle formation 100 is formed by, for example, passenger vehicles or the like. The counterpart railroad vehicle formation 100 includes a head vehicle 111, intermediate vehicles 112, and a trailing vehicle 113, which are vehicles coupled one after another.

The vehicles 111, 112, and 113 each include an electric command cable 114. Further, the vehicles 111, 112, and 113 each include a main reservoir pipe 115 and the brake pipe 116. The main reservoir pipes 115 and the brake pipes 116 run throughout each of the vehicles 111, 112, and 113. The main reservoir pipes 115 and the brake pipes 116 are each filled with compressed air, which is compressed by an air compressor (not shown). The main reservoir pipes 115 and the brake pipes 116 of the head vehicle 111 and the trailing vehicle 113 include sluice valves 101, 102, 103, and 104. The sluice valves 101, 102, 103, and 104 are closed when the counterpart railroad vehicle formation 100 travels solely. When the counterpart railroad vehicle formation 100 is coupled to the railroad vehicle formation 10, among the sluice valves 101, 102, 103, and 104, those on a coupler 118 that is coupled to the railroad vehicle formation 10 are open.

The head vehicle 111 and the trailing vehicle 113 of the counterpart railroad vehicle formation 100 each include a brake setting unit 105 and an automatic brake valve 106.

The brake setting unit 105 is configured to generate a third electric command E31, which serves as an electric signal similar to the first electric command E11, and electrically connected to the electric command cable 114. The automatic brake valve 106 is connected to the brake pipe 116 and used to reduce the fluid pressure in the brake pipe 116.

The vehicles 111, 112, and 113 each include a railroad vehicle brake device 120 (hereinafter, simply referred to as the brake device 120). The brake devices 120 of the vehicles 111, 112, and 113 have identical configurations. Thus, the description will focus on the brake device 120 of the trailing vehicle 113, and the other brake devices 120 will not be described in detail.

The brake device 120 includes a brake actuator 122, a third brake controller 123 serving as an electric commanding air brake device, and the fourth brake controller 124 serving as an automatic air brake device.

The brake actuator 122, which has the same structure as the brake actuator 22, is, for example, a pneumatic cylinder. The brake actuator 122 includes a piston (not shown) and is provided with a drive pressure P30, which corresponds to a third control pressure P31 from the third brake controller 123 or a fourth control pressure P41 from the fourth brake controller 124. The piston of the brake actuator 122 is moved by the drive pressure P30. The movement of the piston causes brake pads (not shown) to apply frictional resistance to the wheels (not shown). This applies the brakes on the counterpart railroad vehicle formation 100.

### [Schematic Structure of Third Brake Controller]

The third brake controller 123 includes a drive pressure pipe 126, a third valve device 127, and an air spring pressure intake pipe 128.

The drive pressure pipe 126 is used to transmit the drive pressure P30, which drives the brake actuator 122, to the brake actuator 122. The drive pressure pipe 126 is connected to the main reservoir pipe 115 and a cylinder chamber (not shown) of the brake actuator 122. An intermediate portion of the drive pressure pipe 126 is connected to the third valve device 127.

The third valve device 127 is configured to generate the drive pressure P30, which corresponds to the command value of a normal brake command, when receiving a normal brake command as the third electric command E31. The third valve device 127 is connected to the main reservoir pipe 115 by the drive pressure pipe 126.

The third valve device 127 includes a brake control unit 130, a third electro-pneumatic conversion valve 131, a third control pipe 132, a dual check valve 133, a variable load valve 134, and a third relay valve 135.

The brake control unit 130 is, for example, a controller including a CPU, a ROM, and a RAM. When receiving a normal brake command as the third electric command E31, the brake control unit 130 outputs a third electro-pneumatic conversion command E32 based on a brake command value indicated by the third electric command E31. The third electro-pneumatic conversion command E32 is provided to the third electro-pneumatic conversion valve 131.

The third electro-pneumatic conversion valve 131 is, for example, a motor-operated valve. The third electro-pneumatic conversion valve 131 sets the open amount of the valve 131 to a value corresponding to the third electro-pneumatic conversion command E32. The third electro-pneumatic conversion valve 131 is located in an intermediate portion of the third control pipe 132.

The third control pipe 132 is branched from the drive pressure pipe 126. The fluid pressure P10 of the main reservoir pipe 115 is converted at the third electro-pneumatic conversion valve 131 to the third control pressure P31. The dual check valve 133, which is supplied with the third control pressure P31, is connected to the intermediate portion of the third control pipe 132.

The dual check valve 133 is a valve including two input ports and one output port. When fluids having different pressures are respectively supplied to the two input ports, the dual check valve 133 is configured to supply the output port with the fluid having the larger pressure. One of the input ports of the dual check valve 133, which is connected to the third electro-pneumatic conversion valve 131 by the third control pipe 132, receives the third control pressure P31. The output port of the dual check valve 133 is connected to the variable load valve 134.

The variable load valve 134 is connected by the air spring pressure intake pipe 128 to an air spring (not shown), which serves as a suspension device of the trailing vehicle 113, and transmits the pressure of the air chamber of the air spring. The variable load valve 134 outputs a third control pressure P31', which corresponds to the pressure of the air spring, or a fourth control pressure P41', which will be described later, to the third relay valve 135.

The third relay valve 135 is a valve operated when provided with the third control pressure P31' or the fourth control pressure P41'. The third relay valve 135 is connected to an intermediate portion of the drive pressure pipe 126. The third relay valve 135 includes a third gate 135a. The third gate 135a is continuously connected to the interior of the drive pressure pipe 126. The condition of the fluid passing through the drive pressure pipe 126 changes in accordance with the open amount of the third gate 135a. In the present embodiment, the third relay valve 135 sets the open amount of the third gate 135a in correspondence with the third control pressure P31' or the fourth control pressure P41'.

In the structure described above, the third valve device 127 converts the fluid pressure P101 from the main reservoir pipe 115 to the drive pressure P30. Then, the third valve device 127 outputs the drive pressure P30 from the third gate 135a to the brake actuator 122.

The schematic structure of the third brake controller 123 has been described above. The schematic structure of the fourth brake controller 124 will now be described.

### [Schematic structure of fourth brake controller]

The fourth brake controller 124 includes the brake pipe 116, a distribution valve 141, an auxiliary tank 142, and an action chamber 143.

The brake pipe 116 includes first to fourth pipes 116a to 116d. In the brake pipe 116, the first pipe 116a runs throughout each of the vehicles 111, 112, and 113. The second pipe 116b is branched from the first pipe 116a and connected to the distribution valve 141.

The distribution valve 141 is used as a portion that distributes the brake pipe pressure BP. The distribution valve 141 is connected by the third pipe 116c to the auxiliary tank 142. The distribution valve 141 is connected by the fourth pipe 116d to the other one of the ports of the dual check valve 133. The action chamber 143 is connected to the fourth pipe 116d. This forms an action chamber volume balanced with the volume of the auxiliary tank 142.

The distribution valve 141 distributes the air in the first pipe 116a of the brake pipe 116 to the auxiliary tank 142 when supplied with the brake pipe pressure BP such as when the automatic brake valve 106 is in a relaxed position (braking force not applied). The distribution valve 141 distributes the compressed air from the auxiliary tank 142 via the fourth pipe 116d to the dual check valve 133 when the automatic brake valve 106 is at a brake application position (braking force applied) and the brake pipe pressure BP is reduced in the first pipe 116a. This converts the brake pressure in the auxiliary tank 142 to the fourth control pressure P41. Further, the brake pressure in the auxiliary tank 142 is converted to the fourth control pressure P41' by the dual check valve 133 and the variable load valve 134. The fourth control pressure P41' is output to the third relay valve 135.

The schematic structure of the counterpart railroad vehicle formation 100 has been described above.

### [Operation when railroad vehicle formation and counterpart railroad vehicle formation are coupled]

One example of the operation of the brake devices 20 and 120 when the railroad vehicle formation 10 and the counterpart railroad vehicle formation 100 are coupled will now be described. More specifically, under a situation in which the railroad vehicle formation 10 is towing the counterpart railroad vehicle formation 100, descriptions will be given for (1) the brake releasing operation, (2) the normal brake operation, and (3) the emergency brake operation. A further description will be given of (4) the operation of the brake device 20 when the counterpart railroad vehicle formation 100 is towing the railroad vehicle formation 10.

Operations (1) to (4) will be described under the assumption that the coupler 16 of the railroad vehicle formation 10 and the coupler 118 of the counterpart railroad vehicle formation 100 are coupled to each other. Hereafter, among the portions where the fluid pressure is acting, the locations referred to in the description are shown by thick lines.

### [(1) Brake releasing operation when railroad vehicle formation 10 is towing counterpart railroad vehicle formation 100J

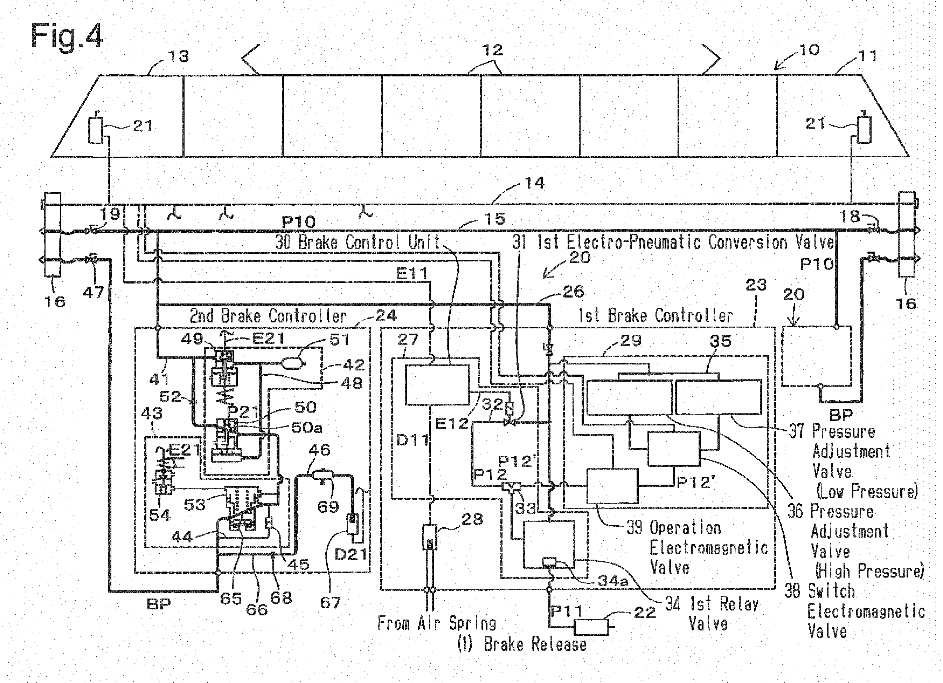

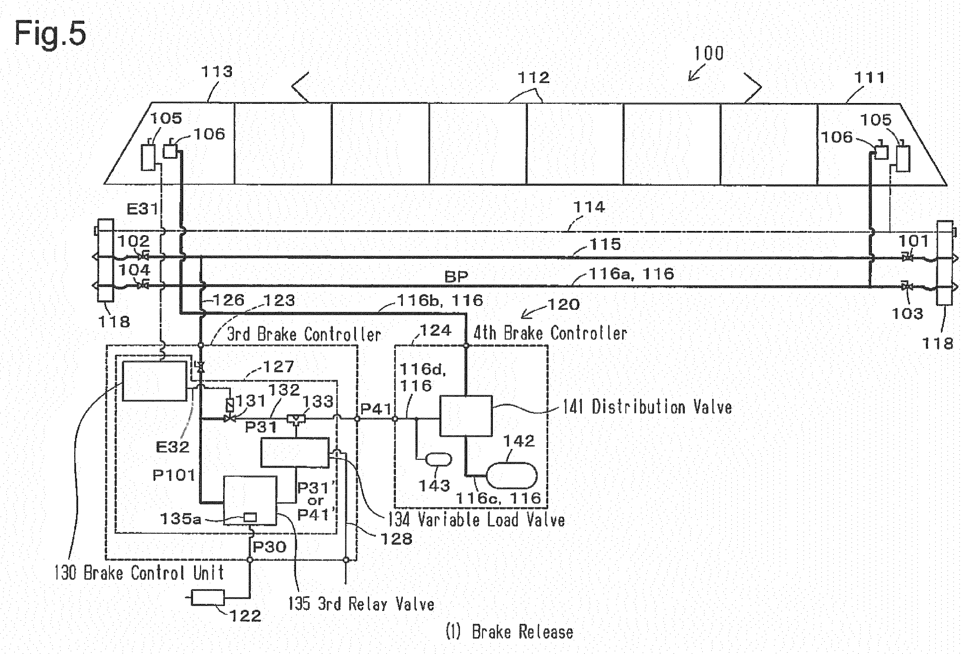

Fig. 4 is a diagram showing one example of the operation of the railroad vehicle formation 10. Fig. 5 is a diagram showing one example of the operation of the counterpart railroad vehicle formation 100. Referring to Figs. 4 and 5, in the case of condition (1), in the first brake controller 23 of the brake device 20, the fluid pressure P10 of the main reservoir pipe 15 acting in the drive pressure pipe 26 reaches the first electro-pneumatic conversion valve 31 and the first relay valve 34 of the first brake controller 23. In the second brake controller 24, the second electro-pneumatic conversion valve 49 outputs the second control pressure P21. This opens the second relay valve 50. As a result, the fluid pressure P10 from the main reservoir pipe 15 is converted to the brake pipe pressure BP in the second relay valve 50 and transmitted via the release valve device 43 and the couplers 16 and 118 to the first pipe 116a of the brake pipe 116. As a result, the air from the second relay valve 50 is collected in the auxiliary air tank 142 via the distribution valve 141. In the third brake controller 123, the fluid pressure P10 transmitted to the main reservoir pipe 115 via the main reservoir pipe 15 acts in the drive pressure pipe 126 reaching the third electro-pneumatic conversion valve 131 and the third relay valve 135.

### [(2) Normal brake operation when railroad vehicle formation 10 is towing counterpart railroad vehicle formation 100]

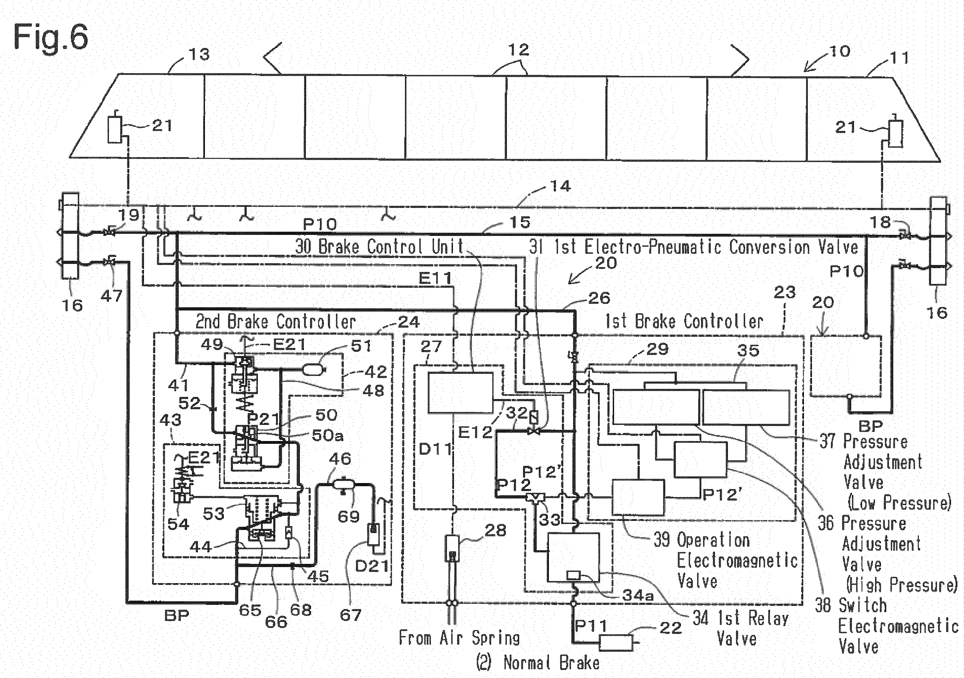

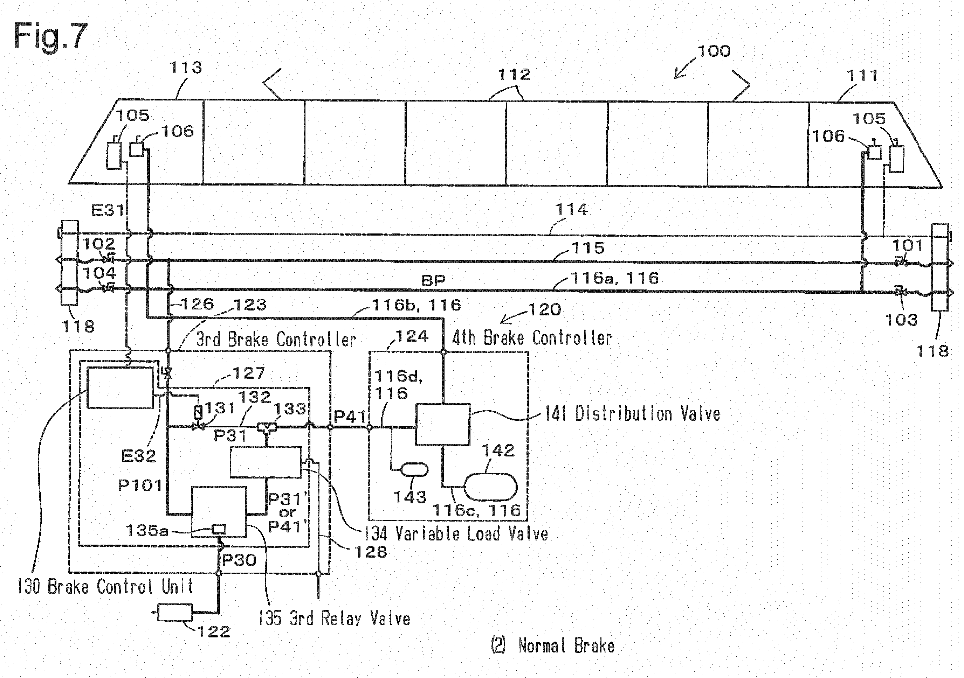

Fig. 6 is a diagram showing one example of the operation of the railroad vehicle formation 10. Fig. 7 is a diagram showing one example of the operation of the counterpart railroad vehicle formation 100. Referring to Figs. 6 and 7, in the case of condition (2), when the driver of the railroad vehicle formation 10 operates the brake setting unit 21, the brake setting unit 21 generates a normal brake command as the first electric command E11 and the second electric command E21. As a result, in the first brake controller 23, the first control pressure P12 from the first electro-magnetic conversion valve 31 is transmitted to the first relay valve 34. This opens the first gate 34a of the first relay valve 34 by a predetermined amount, and the drive pressure P11 corresponding to the braking command value of the first electric command E11 is transmitted from the first relay valve 34 to the brake actuator 22.

Further, in the second brake controller 24, the second electro-pneumatic conversion valve 49 changes the second control pressure P21 to decrease the brake pipe pressure BP output from the second relay valve 50. As a result, the open degree of the second relay valve 50, for example, decreases. This also decreases the brake pipe pressure BP of the brake pipe 116 in the fourth brake controller 124 of the counterpart railroad vehicle formation 100. In the fourth brake controller 124, the distribution valve 141 supplies compressed air from the auxiliary tank 142 to the dual check valve 133 in correspondence with the decreased pressure amount. As a result, the fourth control pressure P41 acts on the variable load valve 134, and the fourth control pressure P41' output from the variable load valve 134 acts on the third relay valve 135. This transmits the drive pressure P30, which corresponds to the control command value of the second electric command E21, from the third relay valve 135 to the brake actuator 122.

In a normal brake operation, the brake setting unit 21 sets the first electric command E11 so that the timing for starting the supply of the drive pressure P11 to the brake actuator 22 is delayed by a predetermined time from the timing for starting the supply of the brake pipe pressure BP from the second relay valve 50. Thus, the first relay valve 34 supplies the drive pressure P11 to the brake actuator 22 after a predetermined time (e.g., several seconds) elapses from when the brake pipe pressure BP received from the brake controller 24 is reduced.

### [(3) Emergency brake operation when railroad vehicle formation 10 is towing counterpart railroad vehicle formation 100]

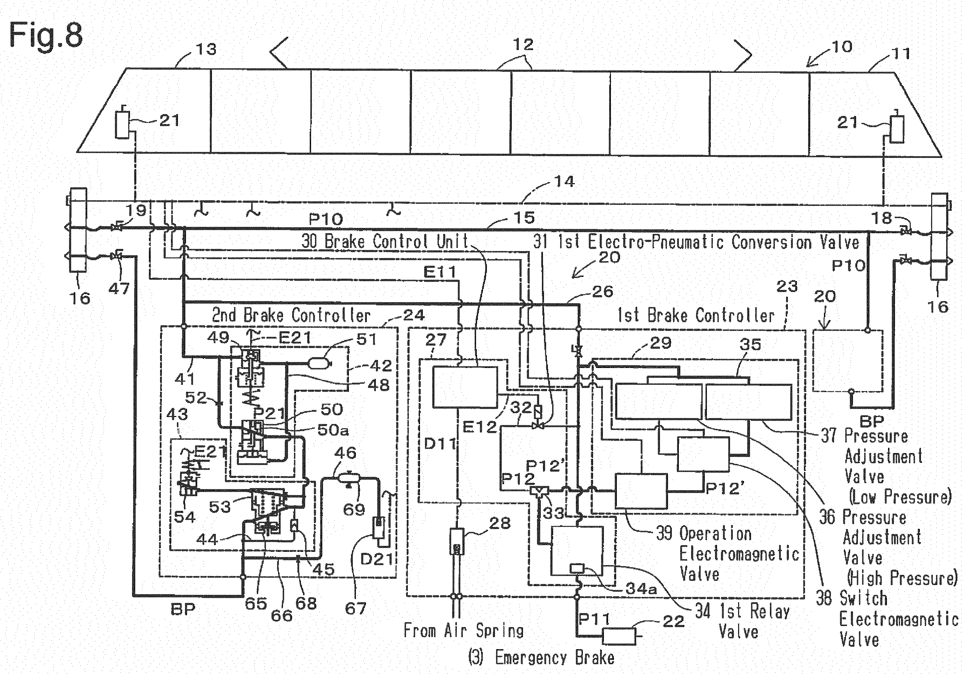

Fig. 8 is a diagram showing one example of the operation of the railroad vehicle formation 10. Referring to Fig. 8, in the case of condition (3), when the driver of the railroad vehicle formation 10 operates the brake setting unit 21, the brake setting unit 21 generates an emergency braking command as the first electric command E11 and the second electric command E21. This opens the operation electromagnetic valve 39 in the first brake controller 23. As a result, the pressure received from the main reservoir pipe 15 via the pressure adjustment valve 36 or the pressure adjustment valve 37 (in Fig. 8, for example, pressure adjustment valve 37) is supplied to the first relay valve 34 via the switch electromagnetic valve 38, the operation electromagnetic valve 39, and the dual check valve 33. Thus, the drive pressure P11 of the main reservoir pipe 15 is converted to the first control pressure P12' and applied to the first relay valve 34. This greatly opens the first gate 34a of the first relay valve 34, and the maximum drive pressure P11 that can be set is transmitted from the first relay valve 34 to the brake actuator 22.

Further, in the second brake controller 24, the electromagnetic release valve 54, which has received the second electric command E21, opens and releases pressure to the outside via the main release valve 53. This promptly decreases the brake pipe pressure BP. In this case, the operation of the counterpart railroad vehicle formation 100 is the same as the case of condition (2) and thus will not be described.

In an emergency brake operation, the brake setting unit 21 conforms the timing for starting the supply of the drive pressure P11 to the brake actuator 22 to the timing for starting the release of the brake pipe pressure BP from the electromagnetic release valve 54. This allows the emergency brake operation to be promptly started.

### [(4) Operation of brake device 20 of railroad vehicle formation 10 when counterpart railroad vehicle formation 100 is towing railroad vehicle formation 10]

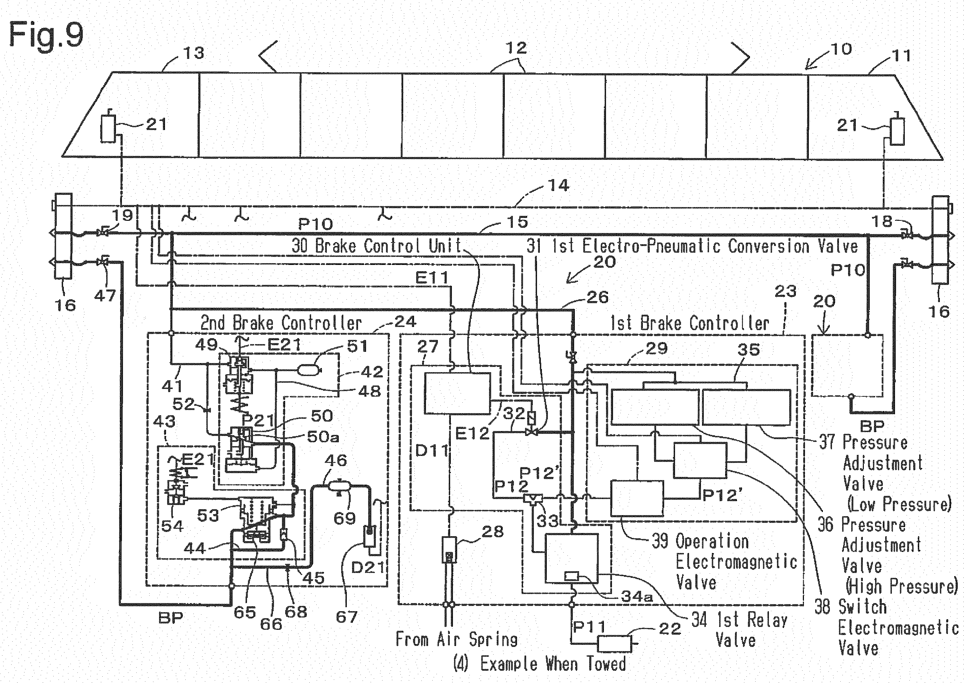

Fig. 9 is a diagram illustrating one example of the operation of the railroad vehicle formation 10. Referring to Fig. 9, in the case of condition (4), the main reservoir pipe 15 and the main brake pipe 41 of the railroad vehicle formation are respectively connected to the main reservoir pipe 115 and the brake pipe 116 (not shown in Fig. 9) of the counterpart railroad vehicle formation 100. In this case, the second relay valve 50 is closed, and the brake pipe pressure BP acts on a portion of the main brake pipe 41 in the second brake controller 24 and on the pressure intake pipe 66. The driver of the counterpart railroad vehicle formation 100 operates the automatic brake valve 106 to change the brake pipe pressure BP. The pressure sensor 67 outputs the pressure detection value D21 of the brake pipe pressure BP to the brake control unit 30. The brake control unit 30 generates the first electric command E11 based on the pressure detection value D21 of the brake pipe pressure BP. The brake control unit 30 is capable of outputting the first electro-pneumatic conversion command E12 based on the first electric command E11. Further, the brake control unit 30 is capable of outputting the first electric command E11 as an emergency braking command via the electric command cable 14 to the emergency brake device 29. This performs the normal brake operation and the emergency brake operation, which are described above, with the brake device 20.

As described above, the brake device 20 of the present embodiment realizes the configuration of an electric commanding air brake device in the railroad vehicle formation 10. Further, the brake device 20 is able to use the third brake controller 123 as an automatic air brake device with the brake pipe 116 of the counterpart railroad vehicle formation 100. More specifically, the brake device 20 is able to drive the brake actuator to generate braking force corresponding to the command value of the first electric command E11. Further, based on the second electric command E21, the brake device 20 is able to set the brake pipe 116 of the counterpart railroad vehicle formation 100 to the brake pipe pressure BP. In this manner, even though the railroad vehicle formation 10 does not use a brake pipe to apply brakes on the railroad vehicle formation 10, the brake device 120 of the counterpart railroad vehicle formation 100 that includes the brake pipe 116 can be used. As a result, the railroad vehicle formation 10 and the counterpart railroad vehicle formation 100 may be slowed down further promptly. This allows for the vehicles to be transported further promptly.

In the brake device 20, the first relay valve 34 is able to set the open amount of the first gate 34a in accordance with the first control pressure P12 from the first electro-pneumatic conversion valve 31. In this configuration, in correspondence with the first control pressure P12, which is the pilot pressure, the first relay valve 34 outputs fluid having the necessary volume to the brake actuator 22 as the drive pressure P11 corresponding to the first electric command E11. Thus, the structure of the first electro-pneumatic conversion valve 31, which is formed by an electromagnetic valve or the like, is reduced in size.

In the brake device 20, the second valve device 42 is able to set the brake pipe pressure BP to a value associated with the value of the drive pressure P11. In this configuration, the drive pressure P11, which is supplied to the brake actuator 22, and the brake pipe pressure BP are associated with each other. Thus, the brake device 20 ensures further conformance of the braking condition of the railroad vehicle formation and the braking condition of the counterpart railroad vehicle formation 100. As a result, the brake devices 20 and 120 cooperate to further promptly slow down the railroad vehicle formation 10 and the counterpart railroad vehicle formation 100.

In the brake device 20, the first valve device 27 is configured so that during a normal brake operation, the drive pressure P11 is supplied to the brake actuator 22 after a predetermined time elapses from when the brake pipe pressure BP from the second brake controller 24 is reduced. In this configuration, the first valve device 27 outputs the drive pressure P11 when receiving the first electric command E11, which is an electric signal, and operates the brake actuator 22. Thus, the time from when the first valve device 27 receives the first electric command to when the drive force P11 is output is short, and the first valve device 27 has high responsiveness. In the counterpart railroad vehicle formation 100, the brake actuator 122 of the counterpart railroad vehicle formation 100 is operated in accordance with changes in the pressure of the brake pipe 116. Thus, in the brake device 120, the propagation speed of a pressure change in the brake pipe 116 is slower than the propagation speed of an electric signal, and the responsiveness is relatively low. Taking such characteristics into consideration, the point of time for starting the supply of the drive pressure P11 from the first valve device 27 is later than the point of time for starting reduction of the brake pipe pressure BP from the second valve device 42. This increases the degree of conformance of the operation timing of the brake actuator 22 and the operation timing of the brake actuator 122. As a result, when applying the brakes, the counterpart railroad vehicle formation 100 does not excessively push the railroad vehicle formation 10. Thus, the couplers 16 and 118 are not adversely affected.

In the brake device 20, the second relay valve 50 sets the open amount of the second gate 50a in correspondence with the second control pressure P21 from the second electro-pneumatic conversion valve 49. This configuration allows the brake pipe pressure BP and the necessary air amount to be generated in correspondence with the second electric command E21, which serves as an electric signal. Thus, the brake device 20 is able to set the braking amount of the counterpart railroad vehicle formation with higher accuracy.

In the brake device, the release valve device 43 is configured to be capable of readily (intentionally) releasing fluid from the brake pipe 116 of the counterpart railroad vehicle formation 100. This configuration allows the brake device 20 of the railroad vehicle formation to readily reduce the brake pipe pressure BP during an emergency brake operation when driving the brake actuator 122 of the counterpart railroad vehicle formation 100.

In the brake device 20, the electromagnetic release valve 54 opens based on an emergency braking command, which serves as the second electric command E21, to forcibly reduce the pressure of the brake pipe 116 in the counterpart railroad vehicle formation 100. This allows the brakes to be applied further promptly on the counterpart railroad vehicle formation 100.

The brake device 20 includes the one-way valve in the bypass pipe 44. In this configuration, the fluid in the brake pipe 116 of the counterpart railroad vehicle formation 100 can be circulated to the main release valve 53 of the release valve device 43. This maintains the release valve device 43 in the same state.

The brake device 20 includes the first constriction 52 in the main brake pipe 41. In this configuration, the amount of fluid per unit time supplied from the main brake pipe 41 to the brake pipe 116 of the counterpart railroad vehicle formation 100 is restricted so as not to become greater than a predetermined amount. As a result, for example, when the automatic brake valve 106 or a conductor valve (not shown) is operated in the counterpart railroad vehicle formation 100, as long as the supplied amount of fluid is greater than the released amount, reduction in the pressure of the brake pipe 116 is further ensured. As a result, the application of brakes to the counterpart railroad vehicle formation 100 by the operation of the automatic brake valve 106 or the like is further ensured. Further, the first constriction 52 is arranged so that the operation of the second relay valve 50 does not affect the responsiveness of changes in the brake pipe pressure BP. This allows the brake pipe pressure BP to be promptly changed.

In the brake device 20, the first valve device 27 is able to output the drive pressure P11, which is set based on the brake pipe pressure BP, from the first gate 34a to the brake actuator 22. For example, when the counterpart railroad vehicle formation 100 tows the railroad vehicle formation 10, this configuration allows the brake control unit 30 to generate the first electric command E12 in correspondence with the brake pipe pressure BP of the counterpart railroad vehicle formation 100, that is, the braking amount of the counterpart railroad vehicle formation 100. Thus, when the counterpart railroad vehicle formation 100 tows the railroad vehicle formation 10, the brake device 20 cooperates with the brake device 120 so that the brakes may be further promptly applied on the counterpart railroad vehicle formation 100 and the railroad vehicle formation 10.

As described above, even when a brake pipe is not used to apply the brakes to the railroad vehicle formation 10, the brake device 20 allows for use of the brake device 120 of the counterpart railroad vehicle formation 100 that includes the brake pipe 116.

In the railroad vehicle formation 10, among the vehicles 11, 12, and 13, the brake device 20 is arranged in one or both of the head vehicle 11 and the trailing vehicle 13. In this configuration, among the vehicles 11, 12, and 133, the second brake controller 24 for using the brake device 120 of the counterpart railroad vehicle formation 100 is arranged in only the vehicle that can be directly coupled to the counterpart railroad vehicle formation 100. This simplifies the structure of the railroad vehicle formation 10.

One embodiment of the present invention has been described above. The present invention is not limited to the above embodiment and may be modified and implemented in various forms within the scope of the claims. For example, the above embodiment may be modified and implemented as described below.
(1) Based on the first electric command, the first valve device only needs to output the drive pressure that corresponds to the command value of the normal brake command, and the specific configuration is not limited to the above configuration. Based on the second electric command, the second valve device only needs to output the brake pipe pressure that corresponds to the command value of the normal brake command, and the specific configuration is not limited to the above configuration.
(2) In the above embodiment, the first electric command and the second electric command are different electric signals but do not have to be so. For example, the first electric command and the second electric command may be the same electric signal. Further, the first electric command and the second electric command may be irrelevant signals.

### INDUSTRIAL APPLICABILITY

The present invention is widely applicable to a railroad vehicle brake device, a railroad vehicle, and a railroad vehicle formation

### DESCRIPTION OF THE REFERENCE SYMBOLS

- 11: head vehicle (railroad vehicle)
- 13: trailing vehicle (railroad vehicle)
- 15: main reservoir pipe
- 20: railroad vehicle brake device
- 22: brake actuator
- 23: first brake controller
- 24: second brake controller
- 27: first valve device
- 34a: first gate
- 42: second valve device
- 100: counterpart railroad vehicle
- 116: brake pipe
- 124: fourth brake controller (automatic air brake device)
- BP: brake pipe pressure
- E11: first electric command
- E12: second electric command
- P10: fluid pressure
- P11: drive pressure

## Claims

1. A railroad vehicle brake device arranged in a railroad vehicle (10), the railroad vehicle brake device including:
a first brake controller (23) including a first valve device (27) connected to a main reservoir pipe (15), wherein the first valve device (27) includes a first gate (34a) of which open amount corresponds to a first electric command (E11) serving as a predetermined electric signal, and the first valve device (27) outputs fluid pressure (P10), which serves as drive pressure (P11) from the main reservoir pipe (15), from the first gate (34a) to a brake actuator (22); **characterized by**
a second brake controller (24) that sets a brake pipe pressure (BP) of an automatic air brake device (124) included in a counterpart railroad vehicle (100) serving as a railroad vehicle that is separate from the railroad vehicle (10) to control braking of the counterpart railroad vehicle (100);
wherein the second brake controller (24) includes a second valve device (42); and
the second valve device (42) is configured to be capable of setting the brake pipe pressure (BP) by supplying air to or exhausting air from the fluid pressure (P10) from the main reservoir pipe (15) when operated based on a second electric command (E21) serving as predetermined electric signal.

2. The railroad vehicle brake device according to claim 1, wherein the first valve device (27) includes:
a first electro-pneumatic conversion valve (31) connected to the main reservoir pipe (15), wherein the first electro-pneumatic conversion valve (31) converts the fluid pressure (P10) to a first control pressure (P12) and outputs the first control pressure (P12) when operated based on the first electric command (E11); and
a first relay valve (34) that includes the first gate (34a) and sets the open amount of the first gate (34a) in correspondence with the first control pressure (P12).

3. The railroad vehicle brake device according to claim 1 or 2, wherein the second valve device (42) is configured to be capable of setting the brake pipe pressure (BP) having a value associated with a value of the drive pressure (P11).

4. The railroad vehicle brake device according to any one of claims 1 to 3, wherein the first valve device (27) is configured to supply the drive pressure (P11) to the brake actuator (22) after a predetermined time elapses from when the brake pipe pressure (BP) from the second brake controller (24) is reduced.

5. The railroad vehicle brake device according to any one of claims 1 to 4, wherein
the second brake controller (24) includes a main brake pipe (41) connected to the main reservoir pipe (15) and to the brake pipe (116) of the counterpart railroad vehicle (100); and
the second valve device (42) includes:
a second electro-pneumatic conversion valve (49) connected to the main brake pipe (41), and wherein the second electro-pneumatic conversion valve (49) converts the fluid pressure (P10) to a second control pressure (P21) and outputs the second control pressure (P21) when operated based on the second electric command (E21); and
a second relay valve (50) including a second gate (50a) that adjusts the fluid pressure (P10) to the brake pipe pressure (BP) and outputs the fluid pressure (P10), wherein the second relay valve (50) sets an open amount of the second gate (50a) in correspondence with the second control pressure (P21).

6. The railroad vehicle brake device according to claim 5, wherein the second brake controller (24) includes a release valve device (43) configured to transmit the brake pipe pressure (BP) from the second relay valve (50), wherein the release valve device (43) is configured to be capable of readily releasing fluid from the main brake pipe (41).

7. The railroad vehicle brake device according to claim 6, wherein the release valve device (43) includes a main release valve (53), wherein the main release valve (53) is configured to be capable of readily releasing fluid from the main brake pipe (41) when operating an emergency brake.

8. The railroad vehicle brake device according to claim 6 or 7, wherein the release valve device (43) includes an electromagnetic valve (54), wherein the electromagnetic valve (54) is configured to be capable of readily releasing fluid from the main brake pipe (41) based on an emergency brake operation command of the railroad vehicle (10).

9. The railroad vehicle brake device according to any one of claims 6 to 8, wherein the second brake controller (24) includes:
a bypass pipe (44) connected to the main brake pipe (41), wherein the bypass pipe (44) bypasses the release valve device (43); and
a one-way valve (45) arranged in the bypass pipe (44), wherein the one-way valve (45) restricts pressure transmission toward the second valve device (42) in the bypass pipe (44).

10. The railroad vehicle brake device according to any one of claims 5 to 9, wherein
the second brake controller (24) includes a constriction (52) that partially decreases an inner diameter of the main brake pipe (41); and
the second brake controller (24) is configured so that fluid that has passed through the constriction (52) in the main brake pipe (41) is supplied via the second relay valve (50) to the brake pipe (116) of the counterpart railroad vehicle (100).

11. The railroad vehicle brake device according to any one of claims 1 to 10, including a pressure detector (46) that detects the brake pipe pressure (BP) of the counterpart railroad vehicle (100), wherein the first valve device (27) is capable of outputting the drive pressure (P11), which is set based on the brake pipe pressure (BP), from the first gate (34a) to the brake actuator (22).

12. A railroad vehicle being **characterized by** including the railroad vehicle brake device according to any one of claims 1 to 11.

13. A railroad vehicle formation being **characterized by** including:
a plurality of railroad vehicles (11, 12, 13) coupled one after another; and
the railroad vehicle brake device according to any one of claims 1 to 11;
wherein the railroad vehicle brake device is arranged in one or both of a head vehicle (11) and a trailing vehicle (13) among the rail road vehicles (11, 12, 13).

## Patentansprüche

1. Eine Schienenfahrzeug-Brems-Vorrichtung, die in einem Schienenfahrzeug (10) angeordnet ist, die Schienenfahrzeug-Brems-Vorrichtung beinhaltet:
eine erste Brems-Steuerung (23) mit einer ersten Ventil-Vorrichtung (27), die mit einer Haupt-Reservoir-Leitung (15) verbunden ist, wobei die erste Ventil-Vorrichtung (27) einen ersten Schieber (34a) aufweist, dessen Öffnungsbetrag einem ersten elektrischen Befehl (E11) entspricht, des als ein vorbestimmtes elektrisches Signal dient, und die erste Ventil-Vorrichtung (27) Fluid-Druck (P10), der als Antriebs-Druck (P11) von der Haupt-Reservoir-Leitung (15) dient, von dem ersten Schieber (34a) an einen Brems-Aktuator (22) ausgibt, **gekennzeichnet durch**
eine zweite Brems-Steuerung (24), die einen Brems-Leitungs-Druck (BP) einer Automatik-Druckluft-Brems-Vorrichtung (124) setzt, die in einem Gegenstück-Schienenfahrzeug (100) enthalten ist, das als ein Schienenfahrzeug dient, das von dem Schienenfahrzeug (10) getrennt ist, um das Bremsen des Gegenstück-Schienenfahrzeugs (100) zu steuern; wobei
die zweite Brems-Steuerung (24) eine zweite Ventil-Vorrichtung (42) enthält; und
die zweite Ventil-Vorrichtung (42) konfiguriert ist, um in der Lage zu sein, den Brems-Leitungs-Druck (BP) zu setzten, durch Zuführen von Luft oder Ablassen von Luft von dem Fluid-Druck (P10) aus der Haupt-Reservoir-Leitung (15), wenn auf der Grundlage eines zweiten elektrischen Befehls (E21), das als vorbestimmtes elektrisches Signal dient, betrieben.

2. Die Schienenfahrzeug-Brems-Vorrichtung gemäß Anspruch 1, wobei die erste Ventil-Vorrichtung (27) beinhaltet:
ein erstes elektro-pneumatisches Umwandlungs-Ventil (31), das mit der Haupt-Reservoir-Leitung (15) verbunden ist, wobei das erste elektro-pneumatische Umwandlungs-Ventil (31) den Fluid-Druck (P10) in einen ersten Steuer-Druck (P12) umwandelt und den ersten Steuer-Druck (P12) ausgibt, wenn auf der Grundlage des ersten elektrischen Befehls (E11) betrieben; und
ein erstes Relais-Ventil (34), das den ersten Schieber (34a) enthält und den Öffnungsbetrag des ersten Schiebers (34a) in Übereinstimmung mit dem ersten Steuer-Druck (P12) setzt.

3. Die Schienenfahrzeug-Brems-Vorrichtung gemäß Anspruch 1 oder 2, wobei die zweite Ventil-Vorrichtung (42) konfiguriert ist, um in der Lage zu sein den Brems-Leitungs-Druck (BP) auf einen Wert zu setzen, der einem Wert des Antriebs-Drucks (P11) zugeordnet ist.

4. Die Schienenfahrzeug-Brems-Vorrichtung gemäß einem der Ansprüche 1 bis 3, wobei die erste Ventil-Vorrichtung (27) konfiguriert ist, um den Antriebs-Druck (P11) dem Brems-Aktuator (22) zuzuführen, nachdem eine vorbestimmte Zeit verstrichen ist, nachdem der Brems-Leitungs-Druck (BP) von der zweiten Brems-Steuerung (24) reduziert ist.

5. Die Schienenfahrzeug-Brems-Vorrichtung gemäß einem der Ansprüche 1 bis 4, wobei die zweite Brems-Steuerung (24) eine Haupt-Brems-Leitung (41) beinhaltet, die mit der Haupt-Reservoir-Leitung (15) und mit der Brems-Leitung (116) des Gegenstück-Schienenfahrzeugs (100) verbunden ist; und
die zweite Ventil-Vorrichtung (42) beinhaltet:
ein zweites elektro-pneumatisches Umwandlungs-Ventil (49), das mit der Haupt-Brems-Leitung (41) verbunden ist, und wobei das zweite elektro-pneumatische Umwandlungs-Ventil (49) den Fluid-Druck (P10) in einen zweiten Steuer-Druck (P21) umwandelt und den zweiten Steuer-Druck (P21) ausgibt, wenn auf der Grundlage des zweiten elektrischen Befehls (E21) betätigt; und
ein zweites Relais-Ventil (50) mit einem zweiten Schieber (50a), das den Fluid-Druck (P10) auf den Brems-Leitungs-Druck (BP) einstellt und den Fluid-Druck (P10) ausgibt, wobei das zweite Relais-Ventil (50) einen Öffnungsbetrag des zweiten Schiebers (50a) in Übereinstimmung mit dem zweiten Steuer-Druck (P21) setzt.

6. Die Schienenfahrzeug-Brems-Vorrichtung gemäß Anspruch 5, wobei die zweite Brems-Steuerung (24) eine Ablass-Ventil-Vorrichtung (43) beinhaltet, die konfiguriert ist, um den Brems-Leitungs-Druck (BP) von dem zweiten Relais-Ventil (50) zu übertragen, wobei die Ablass-Ventil-Vorrichtung (43) konfiguriert ist, in der Lage zu sein, Fluid aus der Haupt-Brems-Leitung (41) leicht freizugeben.

7. Die Schienenfahrzeug-Brems-Vorrichtung gemäß Anspruch 6, wobei die Ablass-Ventil-Vorrichtung (43) ein Haupt-Ablass-Ventil (53) beinhaltet, wobei das Haupt-Ablass-Ventil (53) konfiguriert ist, um in der Lage zu sein, bei Betätigung einer Notbremse Fluid aus der Haupt-Brems-Leitung (41) leicht abzulassen.

8. Die Schienenfahrzeug-Brems-Vorrichtung gemäß Anspruch 6 oder 7, wobei die Ablass-Ventil-Vorrichtung (43) ein elektro-magnetisches Ventil (54) beinhaltet, wobei das elektro-magnetische Ventil (54) konfiguriert ist, um in der Lage zu sein, auf der Grundlage eines Notbremsbefehls des Schienenfahrzeugs (10) Fluid aus der Haupt-Brems-Leitung (41) leicht freizugeben.

9. Die Schienenfahrzeug-Brems-Vorrichtung gemäß einem der Ansprüche 6 bis 8, wobei die zweite Brems-Steuerung (24) beinhaltet:
eine Bypass-Leitung (44), die mit der Haupt-Brems-Leitung (41) verbunden ist, wobei die Bypass-Leitung (44) die Ablass-Ventil-Vorrichtung (43) umgeht; und
ein Einweg-Ventil (45), das in der Bypass-Leitung (44) angeordnet ist, wobei das Einweg-Ventil (45) die Druck-Übertragung zur zweiten Ventil-Vorrichtung (42) in der Bypass-Leitung (44) einschränkt.

10. Die Schienenfahrzeug-Brems-Vorrichtung gemäß einem der Ansprüche 5 bis 9, wobei die zweite Brems-Steuerung (24) eine Verengung (52) aufweist, die einen Innendurchmesser der Haupt-Brems-Leitung (41) teilweise verringert; und
der zweite Bremsregler (24) konfiguriert ist, so dass Fluid, das durch die Verengung (52) in der Haupt-Brems-Leitung (41) hindurchgetreten ist, über das zweite Relais-Ventil (50), der Brems-Leitung (116) des Gegenstück-Schienenfahrzeugs (100) zugeführt ist.

11. Die Schienenfahrzeug-Brems-Vorrichtung gemäß einem der Ansprüche 1 bis 10, beinhaltet einen Druckdetektor (46), der den Brems-Leitungs-Druck (BP) des Gegenstück-Schienenfahrzeugs (100) erfasst, wobei die erste Ventil-Vorrichtung (27) in der Lage ist, den Antriebs-Druck (P11), der auf Basis des Brems-Leitungs-Drucks (BP) gesetzt ist, von dem ersten Schieber (34a) an den Brems-Aktuator (22) abzugeben.

12. Ein Schienenfahrzeug, **gekennzeichnet durch** die Schienenfahrzeug-Brems-Vorrichtung gemäß einem der Ansprüche 1 bis 11.

13. Ein Schienenfahrzeug-Verband, der gekennzeichnet ist, dass er beinhaltet:
eine Mehrzahl von Schienenfahrzeugen (11, 12, 13), die hintereinander gekoppelt sind; und
die Schienenfahrzeug-Brems-Vorrichtung gemäß einem der Ansprüche 1 bis 11;
wobei die Schienenfahrzeug-Bremsvorrichtung in einem oder beiden der Schienenfahrzeuge (11, 12, 13), einem führenden Fahrzeug (11) und einem nachlaufenden Fahrzeug (13), angeordnet ist.

## Revendications

1. Dispositif de frein pour véhicule ferroviaire agencé dans un véhicule ferroviaire (10), le dispositif de frein pour véhicule ferroviaire comprenant :
un premier contrôleur de frein (23) comprenant un premier dispositif de vanne (27) connecté à un tuyau de réservoir principal (15), dans lequel le premier dispositif de vanne (27) comprend une première porte (34a) dont l'ouverture correspond à une première commande électrique (E11) servant de signal électrique prédéterminé, et le premier dispositif de vanne (27) sort une pression de fluide (P10), qui sert de pression de commande (P11) provenant du tuyau de réservoir principal (15), de la première porte (34a) à l'actionneur de frein (22) ;
**caractérisé par** un deuxième contrôleur de frein (24) qui régule une pression de tuyau de frein (BP) d'un dispositif de frein pneumatique automatique (124) inclus dans un véhicule ferroviaire de contrepartie (100) servant de véhicule ferroviaire qui est séparé dudit véhicule ferroviaire (10) pour contrôler le freinage du véhicule ferroviaire de contrepartie (100) ;
dans lequel
le deuxième contrôleur de frein (24) comprend un deuxième dispositif de vanne (42) ; et
le deuxième dispositif de vanne (42) est configuré pour être capable de réguler la pression de tuyau de frein (BP) en alimentant de l'air ou en évacuant de l'air à la pression de fluide (P10) du tuyau de réservoir principal (15) lorsqu'il est actionné sur base d'une deuxième commande électrique (E21) servant de signal électrique prédéterminé.

2. Dispositif de frein pour véhicule ferroviaire selon la revendication 1, dans lequel le premier dispositif de vanne (27) comprend :
une première vanne de conversion électropneumatique (31) connectée au tuyau de réservoir principal (15), dans lequel la première vanne de conversion électropneumatique (31) convertit la pression de fluide (P10) à une première pression de contrôle (P12) et sort la première pression de contrôle (P12) lorsqu'elle est actionnée sur base de la première commande électrique (E11) ; et
une première vanne-relais (34) qui comprend la première porte (34a) et régule l'ouverture de la première porte (34a) en accord avec la première pression de contrôle (P12) .

3. Dispositif de frein pour véhicule ferroviaire selon la revendication 1 ou 2, dans lequel le deuxième dispositif de vanne (42) est configuré pour être capable de réguler la pression de tuyau de frein (BP) dont la valeur est associée à une valeur de la pression de commande (P11).

4. Dispositif de frein pour véhicule ferroviaire selon l'une quelconque des revendications 1 à 3, dans lequel le premier dispositif de vanne (27) est configuré pour alimenter la pression de commande (P11) à l'actionneur de frein (22) après l'écoulement d'un temps prédéterminé depuis le moment où la pression de tuyau de frein (BP) du deuxième contrôleur de frein (24) est réduite.

5. Dispositif de frein pour véhicule ferroviaire selon l'une quelconque des revendications 1 à 4, dans lequel
le deuxième contrôleur de frein (24) comprend un tuyau de frein principal (41) connecté au tuyau de réservoir principal (15) et au tuyau de frein (116) du véhicule ferroviaire de contrepartie (100) ; et
le deuxième dispositif de vanne (42) comprend :
une deuxième vanne de conversion électropneumatique (49) connectée au tuyau de frein principal (41), et dans lequel la deuxième vanne de conversion électropneumatique (49) convertit la pression de fluide (P10) en une deuxième pression de contrôle (P21) et sort la deuxième pression de contrôle (P21) lorsqu'elle est actionnée sur base de la deuxième commande électrique (E21) ; et
une deuxième vanne-relais (50) comprenant une deuxième porte (50a) qui ajuste la pression de fluide (P10) à la pression de tuyau de frein (BP) et sort la pression de fluide (P10), dans lequel la deuxième vanne-relais (50) régule l'ouverture de la deuxième porte (50a) en accord avec la deuxième pression de contrôle (P21).

6. Dispositif de frein pour véhicule ferroviaire selon la revendication 5, dans lequel le deuxième contrôleur de frein (24) comprend un dispositif de vanne de libération (43) configuré pour transmettre la pression du tuyau de frein (BP) de la deuxième vanne-relais (50), dans lequel le dispositif de vanne de libération (43) est configuré pour être capable de libérer promptement le fluide du tuyau de frein principal (41).

7. Dispositif de frein pour véhicule ferroviaire selon la revendication 6, dans lequel le dispositif de vanne de libération (43) comprend une vanne de libération principale (53), dans lequel la vanne de libération principale (53) est configurée pour être capable de libérer promptement le fluide du tuyau de frein principal (41) lors de l'actionnement d'un frein de secours.

8. Dispositif de frein pour véhicule ferroviaire selon la revendication 6 ou 7, dans lequel le dispositif de vanne de libération (43) comprend une vanne électromagnétique (54), dans lequel la vanne électromagnétique (54) est configurée pour être capable de libérer promptement le fluide du tuyau de frein principal (41) sur base d'une commande d'actionnement de frein de secours du véhicule ferroviaire (10) .

9. Dispositif de frein pour véhicule ferroviaire selon l'une quelconque des revendications 6 à 8, dans lequel le deuxième contrôleur de frein (24) comprend :
un tuyau de dérivation (44) connecté au tuyau de frein principal (41), dans lequel le tuyau de dérivation (44) contourne le dispositif de vanne de libération (43) ; et
un clapet anti-retour (45) agencé sur le tuyau de dérivation (44), dans lequel le clapet anti-retour (45) limite la transmission de pression vers le deuxième dispositif de vanne (42) dans le tuyau de dérivation (44).

10. Dispositif de frein pour véhicule ferroviaire selon l'une quelconque des revendications 5 à 9, dans lequel
le deuxième contrôleur de frein (24) comprend une constriction (52) qui réduit partiellement le diamètre interne du tuyau de frein principal (41) ; et
le deuxième contrôleur de frein (24) est configuré de telle sorte que le fluide qui a traversé la constriction (52) dans le tuyau de frein principal (41) est alimenté via la deuxième vanne-relais (50) au tuyau de frein (116) du véhicule ferroviaire de contrepartie (100).

11. Dispositif de frein pour véhicule ferroviaire selon l'une quelconque des revendications 1 à 10, comprenant un détecteur de pression (46) qui détecte la pression de tuyau de frein (BP) du véhicule ferroviaire de contrepartie (100), dans lequel le premier dispositif de vanne (27) est capable de sortir la pression de commande (P11), qui est régulée sur base de la pression de tuyau de frein (BP), de la première porte (34a) à l'actionneur de frein (22).

12. Véhicule ferroviaire, **caractérisé en ce qu'**il comprend le dispositif de frein pour véhicule ferroviaire selon l'une quelconque des revendications 1 à 11.

13. Formation d'un véhicule ferroviaire, **caractérisée en ce qu'**elle comprend :
une pluralité de véhicules ferroviaires (11, 12, 13) couplés l'un derrière l'autre ; et
le dispositif de frein pour véhicule ferroviaire selon l'une quelconque des revendications 1 à 11 ;
dans laquelle le dispositif de frein pour véhicule ferroviaire est agencé dans un véhicule de tête (11) et/ou dans un véhicule de queue (13) parmi les véhicules ferroviaires (11, 12, 13).
